# EUROPÄISCHE PATENTSCHRIFT

(11) **EP 2 874 782 B1**
(45) Veröffentlichungstag und Bekanntmachung des Hinweises auf die Patenterteilung: **06.07.2016**
(21) Anmeldenummer: 13734804.1
(22) Anmeldetag: 10.07.2013
(51) Int. Cl.: B23P 15/10, C21D 1/09, F02F 3/12, C22F 1/00, C22F 3/02, F02F 3/00, B23K 9/04, F02F 3/22

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE PRODUCTION D'UN PISTON POUR MOTEUR À COMBUSTION INTERNE

(30) Priorität: 20.07.2012 DE 102012212791
(43) Veröffentlichungstag der Anmeldung: 27.05.2015
(73) Patentinhaber: Federal-Mogul Nürnberg GmbH, 90441 Nürnberg (DE)
(72) Erfinder: LADES, Klaus, 90459 Nürnberg (DE); CROMME, Wolfram, 90559 Ezelsdorf (DE)
(74) Vertreter: Hoffmann Eitle
(86) Internationale Anmeldenummer: PCT/EP2013/064566
(87) Internationale Veröffentlichungsnummer: WO 2014/012826

(56) Entgegenhaltungen:
- CN-U- 202 012 408
- DE-A1- 3 040 572
- DE-A1-102007 044 696
- DE-C1- 4 205 307
- JP-A- S59 108 849

## Beschreibung

Die Erfindung betrifft ein Verfahren zur Herstellung eines Kolbens für einen Verbrennungsmotor.

Die Entwicklung von Verbrennungsmotoren geht zunehmend in Richtung kleinerer und dennoch leistungsfähiger Motoren. Hieraus entstehen hohe thermische und mechanische Belastungen des Kolbens, insbesondere im Bereich der Brennraummulde.

### Stand der Technik

Um die Belastbarkeit in diesem Bereich eines Kolbens zu erhöhen, ist es beispielsweise aus der DE 30 40 572 A1, die die Merkmale des Oberbegriffs des Anspruchs 1 offenbart, bekannt, Bereiche der Brennraummulde einer Umschmelzbehandlung zu unterziehen, um das Gefüge zu verfeinern und die thermische und/oder mechanische Wechselbeständigkeit zu erhöhen.

Ähnliche Verfahren gehen aus der DE 42 05 307 C1, der JP 59-108849 A und der CN 20 20 12408 U hervor.

### Darstellung der Erfindung

Der Erfindung liegt die Aufgabe zugrunde, ein Verfahren zur Herstellung eines Kolbens für einen Verbrennungsmotor, bei dem der Kolben bereichsweise einer Umschmelzbehandlung unterworfen wird, im Hinblick auf die Effizienz bei einer fortbestehenden Erfüllung der Anforderungen zu verbessern.

Die Lösung dieser Aufgabe erfolgt durch das im Patentanspruch 1 beschriebene Verfahren.

Demzufolge wird im Rahmen eines Verfahrens der Herstellung eines Kolbens für einen Verbrennungsmotor, bei dem insbesondere im Bereich der Brennraummulde zumindest bereichsweise eine Umschmelzbehandlung durchgeführt wird, deren Tiefe in Umfangsrichtung verändert. Mit anderen Worten, weist der entstehende Kolben zumindest bereichsweise umgeschmolzene Zonen auf. Innerhalb dieser Zonen finden sich in Umfangsrichtung unterschiedliche Umschmelztiefen. Die Erfindung bezieht sich somit nicht auf unterschiedliche Umschmelztiefen, die sich daraus ergeben, dass in Umfangsrichtung nebeneinander mehrere "Bahnen" von umgeschmolzenem Gefüge erzeugt werden, die in einem Kernbereich tiefer umgeschmolzen werden als in Randbereichen, so dass trotz einer Anordnung der einzelnen Bahnen möglichst nahe zueinander, in derjenigen Richtung Tiefenunterschiede verbleiben, in der die Bahnen nebeneinander angeordnet sind. Ferner ergibt sich bei dem oben genannten Stand der Technik stellenweise der Eindruck, dass die Umschmelztiefe in Richtungen senkrecht zur Umfangsrichtung am Rand geringer ist als in einem mittleren Bereich.

Demgegenüber wird gemäß der Erfindung in neuartiger Weise die Umschmelztiefe in Umfangsrichtung verändert, so dass sich in Umfangsrichtung Bereiche finden, in denen mit einer größeren Tiefe umgeschmolzen wurde als in anderen Bereichen. Hierdurch kann in weniger belasteten Bereichen eine geringere Umschmelztiefe eingestellt werden als in höher belasteten Bereichen, so dass sich vorteilhafter Weise der Gesamtwärmeeintrag verringert, und die thermische Alterung des Kolbens insgesamt durch den Umschmelzprozess reduziert wird. Nachdem ein möglicher Parameter, der die Umschmelztiefe verringert, die Stromstärke ist, kann der Energiebedarf reduziert werden. Ein weiterer möglicher Parameter ist die Umlaufgeschwindigkeit, die an Stellen mit geringerer Umschmelztiefe erhöht werden kann. Dies führt zu einer Reduzierung der insgesamt erforderlichen Umschmelzzeit und trägt zur Kostenreduzierung bei. Es sei ergänzt, dass die Umschmelzbehandlung bevorzugt durch ein Schweißverfahren durchgeführt wird, so dass insbesondere die Schweißnahtgeometrie und/oder -tiefe in Umfangsrichtung verändert werden kann.

Bevorzugte Weiterbildungen des erfindungsgemäßen Verfahrens sind in den weiteren Ansprüchen beschrieben.

Wie bereits angedeutet, kann die Umschmelztiefe durch Veränderung der Parameter Stromstärke, Spannung, Abstand einer Schweißelektrode von der Oberfläche und/oder der Vorschubgeschwindigkeit variiert werden.

Nachdem es sich bei einem Brennraummuldenrand und/oder -grund um besonders belastete Bereiche handelt, werden durch das erfindungsgemäße Verfahren bevorzugt diese Bereiche einer Umschmelzbehandlung unterzogen.

Im Hinblick auf die Bereiche, in denen eine größere Umschmelztiefe eingestellt wird, wird derzeit bevorzugt, diese in einer Ebene vorzusehen, welche die Achse des Kolbenbolzens enthält. Insbesondere wird derzeit bevorzugt, die Umschmelztiefe in diesem Bereich am größten und in der hierzu senkrechten Richtung am geringsten einzustellen, und die Übergänge zwischen diesen Stellen graduiert vorzunehmen. Das erfindungsgemäße Verfahren bietet darüber hinaus besondere Vorteile bei Kolben mit Kühlkanälen, insbesondere dann wenn eine Brennraummulde zur Kolbenachse versetzt ist. In diesem Fall variiert der Abstand zwischen der Brennraummulde und dem Kühlkanal über den Umfang, und in Bereichen, in denen der verbleibende Abstand besonders gering ist, kann in vorteilhafter Weise die Umschmelztiefe gering eingestellt werden, um ein Durchschmelzen zum Kühlkanal hin zu verhindern. Dies macht die Anwendung einer Umschmelzbehandlung auf derartige Kolben an den genannten kritischen Stellen in bestimmten Situationen erst möglich.

### Kurze Beschreibung der Zeichnungen

Nachfolgend werden bevorzugte Ausführungsbeispiele anhand der Zeichnungen näher erläutert. Es zeigen:
- Fig. 1: eine Schnittansicht eines Kolbens senkrecht zur Kolbenbolzenachse;
- Fig. 2: eine Schnittansicht eines Kolbens durch die Kolbenbolzenachse; und
- Fig. 3: eine Darstellung der Umschmelztiefe über den Umfang.

Ausführliche Beschreibung einer bevorzugten Ausführungsform der Erfindung

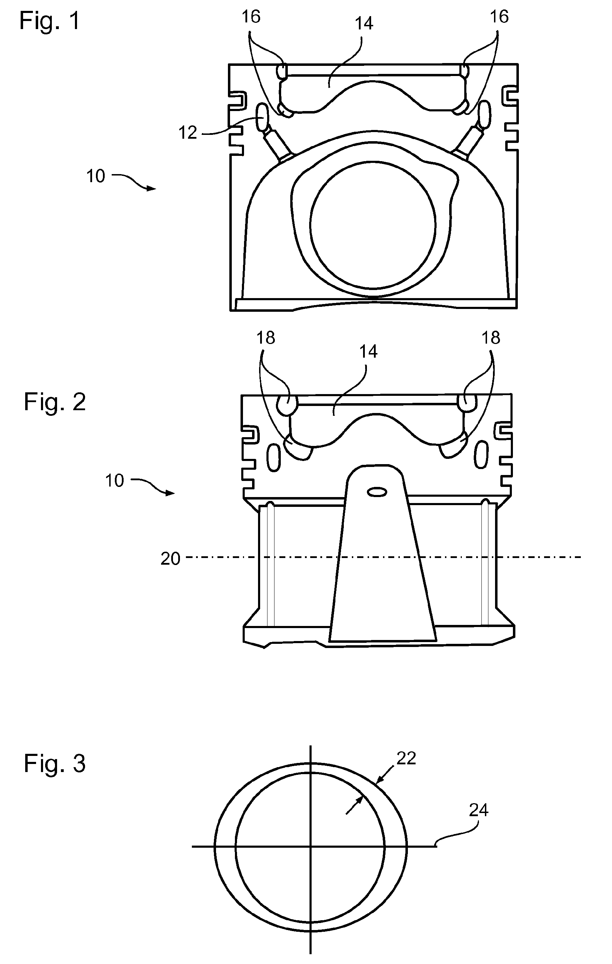

In Fig. 1 ist in einem Schnitt senkrecht zur Kolbenbolzenachse ein Kolben 10 dargestellt, der beispielhaft einen Kühlkanal 12 und eine Brennraummulde 14 aufweist. Mit 16 sind diejenigen Bereiche angedeutet, in denen, um die Belastbarkeit zu erhöhen, eine Umschmelzbehandlung mit einer bestimmten Tiefe durchgeführt wurde.

Im Vergleich mit Fig. 2 ergibt sich, dass diese Bereiche 18 in der Schnittebene, welche die Kolbenbolzenachse 20 enthält, tiefer ausgeführt sind. Mit anderen Worten, erstreckt sich die umgeschmolzene Zone in tiefere Bereiche ausgehend von der Oberfläche. Hierdurch wird in den besonders belasteten Bereichen in der Umgebung der Ebene, welche die Kolbenbolzenachse enthält, eine besondere Belastbarkeit erzielt.

Aus Fig. 3 ergibt sich ein bevorzugter Verlauf der Umschmelztiefe 22 über den Umfang. Die Umschmelztiefe 22 ist bevorzugt im Bereich der Ebene 24, welche die Kolbenbolzenachse enthält, am größten und senkrecht hierzu am geringsten, wobei die Übergänge zwischen den genannten Extremen graduiert gestaltet sind.

## Patentansprüche

1. Verfahren zur Herstellung eines Kolbens (10) für einen Verbrennungsmotor, bei dem insbesondere im Bereich einer Brennraummulde (14) zumindest bereichsweise eine Umschmelzbehandlung durchgeführt wird, **dadurch gekennzeichnet dass** deren Tiefe in Umfangsrichtung verändert wird.

2. Verfahren nach Anspruch 1,
**dadurch gekennzeichnet, dass** Stromstärke, Spannung, Vorschubgeschwindigkeit und/oder Abstand einer Schweißelektrode von der Oberfläche variiert werden.

3. Verfahren nach Anspruch 1 oder 2,
**dadurch gekennzeichnet, dass** die Umschmelzbehandlung am Muldenrand und/oder -grund durchgeführt wird.

4. Verfahren nach einem der vorangehenden Ansprüche,
**dadurch gekennzeichnet, dass** die Umschmelzbehandlung im Bereich einer Ebene (24), welche die Kolbenbolzenachse (20) enthält, tiefer durchgeführt wird.

5. Verfahren nach einem der vorangehenden Ansprüche,
**dadurch gekennzeichnet, dass** ein Kolben (10) mit einem Kühlkanal (12) hergestellt wird.

## Claims

1. Method for producing a piston (10) for an internal combustion engine, in which a remelting treatment is carried out at least in some regions, in particular in the region of a combustion chamber recess (14), **characterised in that** the depth thereof is changed in the peripheral direction.

2. Method according to claim 1, **characterised in that** current strength, voltage, feed rate and/or distance of a welding electrode from the surface are varied.

3. Method according to claim 1 or 2, **characterised in that** the remelting treatment is carried out at the recess edge and/or recess base.

4. Method according to one of the preceding claims, **characterised in that** the remelting treatment is carried out deeper in the region of a plane (24) which contains the piston pin axis (20).

5. Method according to one of the preceding claims, **characterised in that** a piston (10) with a cooling channel (12) is produced.

## Revendications

1. Procédé servant à fabriquer un piston (10) pour un moteur à combustion interne, un traitement de refusion étant effectué au moins par endroits en particulier dans la zone d'un bol de chambre de combustion (14), **caractérisé en ce que** la profondeur du traitement de refusion varie dans la direction périphérique.

2. Procédé selon la revendication 1,
**caractérisé en ce que**
l'intensité du courant, la tension, la vitesse d'avance et/ou la distance d'une électrode de soudage par rapport à la surface varient.

3. Procédé selon la revendication 1 ou 2,
**caractérisé en ce que**
le traitement de refusion est effectué au niveau du bord et/ou du fond du bol.

4. Procédé selon l'une quelconque des revendications précédentes,
**caractérisé en ce que**
le traitement de refusion est effectué plus en profondeur dans la zone d'un plan (24), qui contient l'axe de l'axe de piston (20).

5. Procédé selon l'une quelconque des revendications précédentes,
**caractérisé en ce que**
un piston (10) est fabriqué avec un canal de refroidissement (12).
